# EUROPEAN PATENT SPECIFICATION

(11) **EP 2 371 678 B1**
(45) Date of publication and mention of the grant of the patent: **22.08.2012**
(21) Application number: 11158712.7
(22) Date of filing: 17.03.2011
(51) Int. Cl.: B62D 25/04, B62D 25/08, B60J 5/04

(54) **Automotive vehicle body side structure**
Seitenstruktur der Karosserie eines Kraftfahrzeugs
Structure latérale de carrosserie d'automobile

(30) Priority: 17.03.2010 JP 2010060490; 06.08.2010 JP 2010177333; 06.08.2010 JP 2010177342
(43) Date of publication of application: 05.10.2011
(73) Proprietor: Honda Motor Co., Ltd., Tokyo 107-8556 (JP)
(72) Inventor: Yasuhara, Shigeto, Saitama 351-0193 (JP); Asano, Sadayuki, Saitama 351-0193 (JP); Takeda, Tomoya, Saitama 351-0193 (JP); Kominamidate, Masami, Saitama 351-0113 (JP); Shirasaya, Masahito, Saitama 351-0113 (JP)
(74) Representative: Trossin, Hans-Jürgen

(56) References cited:
- EP-A1- 1 564 050
- JP-A- 2002 347 654
- US-B1- 6 601 910

## Description

### TECHNICAL FIELD

The present invention relates to a vehicle body side structure according to the preamble of claim 1. In particular it relates to a vehicle body side structure that is favorably reinforced against a frontal crash.

### BACKGROUND OF THE INVENTION

Various measures are known and taken for reinforcing a vehicle body against frontal crash. According a prior proposal disclosed in JP2009-269591A (patent document 1), a door beam member extending in the fore and aft direction is attached to the inner panel of a front door so that the impact load at the time of a frontal crash is transmitted by the door beam member to a rear part of the vehicle body, and the front door opening on the lateral side of the vehicle body is prevented from being excessively deformed.

According to the prior proposal disclosed in JP2008-56138A (patent document 2), a door hinge stiffener is attached to the inner surface of a front pillar having a closed cross section so that not only the part of the front pillar supporting the front door hinge may be reinforced but also the impact load at the time of a frontal crash may be transmitted from the part of the front pillar adjoining the front door hinge to the front door.

According to the prior proposal disclosed in JP2009-29202A (patent document 3), an upper member (upper member) extending forward from a middle part of a front pillar is additionally connected to the corresponding side of a dashboard upper member via a gusset plate so that the part of the wheelhouse upper member adjacent to the front pillar is reinforced.

In the invention disclosed in Japanese patent JP2002-347654A (patent document 4), a part of a front fender apron member adjoining a front pillar is reinforced by forming a closed cross section in cooperation with the front pillar and a bead formed therein so that the crash load of a frontal crash can be transmitted from the front fender apron member to the front door via the reinforced junction between the apron member and front pillar.

EP 1 564 050 A1 discloses a vehicle body side structure, comprising a front pillar (3) having a closed cross section and including a vertical lower part; an upper member extending forward from a middle part of the front pillar in a forward direction of the vehicle and also having a closed cross section; a front door (2) hinged to the front pillar for selectively closing an opening (1 a) defined behind the front pillar; a first reinforcing member (9) attached to an inner side of the upper member and extending in a fore and aft direction of the vehicle; a second reinforcing member (48) attached to an inner side of the front pillar; and a third reinforcing member (20) attached to an inner panel (15b) of the front door and extending in the fore and aft direction of the front door; whereby the first, second and third reinforcing members include mutually at least partly overlapping parts as seen in the fore and aft direction of the vehicle with the front door in closed position.

The vehicle body is required to have an adequate stiffness and mechanical strength, but is also desired to be light in weight for obvious reasons. Therefore, it is important to optimize these two factors for the given amount or weight of material for the vehicle body.

The prior invention disclosed in patent document 1 is essentially directed to the reinforcement of localized parts of a vehicle body, and considerations for the mutual cooperation of various vehicle body side members are lacking. In particular, the efficiency of the load transmission of a frontal crash from the wheel house upper member to the rear part of the vehicle body via a front pillar and front door may have a roof for a further improvement.

From patent document 2, for instance, it is known to attach a door hinge stiffener inside the front pillar, and the door hinge stiffener may contribute to a favorable transmission of a frontal crash load from the front pillar to the door beam member. However, the frontal crash load may cause a significant bending deformation of the front pillar, and this may prevent a favorable transmission of the frontal crash load the rear part of the vehicle body.

In the invention disclosed in patent document 3, a wheelhouse upper member which extends forward from a middle part of the front pillar is connected to a side edge of a dashboard upper member via a gusset plate, and this will reinforce the junction between the upper member and front pillar. However, as the junction between the upper member and dashboard member is laterally inwardly offset from the junction between the upper member and front pillar, the transmission path of a frontal crash between the upper member and door beam is bent, and this prevents a favorable transmission of a frontal crash load to the rear part of the vehicle body.

In the invention disclosed in patent document 4, the closed cross section of the front fender apron member reinforces the junction between the apron member and front pillar, but this junction is laterally offset from the door beam member, and this discontinuity in the transmission path of a frontal crash prevents an efficient transmission of a frontal crash load to the rear part of the vehicle body.

### BRIEF SUMMARY OF THE INVENTION

In view of such problems of the prior art, a primary object of the present invention is to provide a vehicle body side structure that is configured to favorably transmit a frontal crash load from an upper member to a door beam member, and from the front beam to a door beam member in an efficient manner.

A second object of the present invention is to provide a vehicle body side structure that enable various structural members along each side of a vehicle body cooperate in a favorable manner so as to jointly promote a transmission of a frontal impact load to a rear part of the vehicle body.

A third object of the present invention is to provide a vehicle body side structure that includes a hinge patch for an upper hinge of a front door configured to favorably contribute to the transmission of a frontal impact load to a rear part of the vehicle body.

A fourth object of the present invention is to provide a vehicle body side structure that includes a structure for enabling a front impact load to be a hinge patch to be favorably transmitted from a door beam member to a rear part of the vehicle via a center pillar.

A fifth object of the present invention is to provide a vehicle body side structure that can maximize the stiffness and mechanical strength of the vehicle body side structure for a given amount/weight of the structural material.

According to the present invention, such objects can be accomplished by providing a vehicle body side structure, in accordance with claim 1.
The vehicle body side structure comprises : a front pillar (10) having a closed cross section and including a vertical lower part; a wheelhouse upper member (22) extending forward from a middle part of the front pillar in a forward direction and also having a closed cross section; a front door (20) hinged to the front pillar for selectively closing an opening defined behind the front pillar; a first reinforcing member (40) attached to an inner side of the upper member and extending in a fore and aft direction; a second reinforcing member (46; 32) attached to an inner side of the front pillar; and a third reinforcing member (48) attached to an inner panel (20B) of the front door and extending in the fore and aft direction; characterized by that: the first, second and third reinforcing members include mutually at least partly overlapping parts as seen in the fore and aft direction.

Thereby, a frontal crash load can be favorably transmitted via the first, second and third reinforcing members substantially in a linear path.

The first reinforcing member may be provided with a hat shaped cross section as seen in the fore and direction that includes a pair of welding flanges (40A, 40B) welded to an inner side of an outer member (22A) of the upper member and a horizontal section (40C). More preferably, one of the welding flanges (40B) of the first reinforcing member is welded to a vertical wall of an outer member (22A) of the upper member, and the other welding flange (40A) of the first reinforcing member is welded to a part (22C) of the outer member of the upper member at an angle to the vertical wall thereof. Thereby, the first reinforcing member can form a structurally sturdy closed cross section in cooperation with the outer member of the upper member which preferably includes a vertical section and an angled section as seen in the fore and aft direction.

The second reinforcing member may comprise a hinge patch (46; 32) attached to a part of the front pillar that supports an upper hinge (42) of the front door, for reinforcement. The second reinforcing member preferably includes a bulkhead piece (46D, 46E; 38) that extends across the front pillar and is welded to opposing inner walls (10A, 10B) of the front pillar (10).

The third reinforcing member typically comprises a door beam member (48) extending substantially over an entire fore and aft extent of the front door, and is preferably provided with a S-shaped cross section for an improved resistance to buckling. The first and second reinforcing members comprise horizontal sections (40C, 46D; 40C, 38) that substantially align with a centroid (G) of the cross section of the third reinforcing member as seen in the fore and aft direction so that the a frontal crash load may be favorably transmitted via the first, second and third reinforcing members without causing any undue lateral bending or other deformations.

According to a preferred embodiment of the present invention, the hinge patch (32) includes a vertically extending central part (32A), a front flange bent (32D) laterally from the central part, a rear flange (32E) laterally bent from the central part, and the front and rear flanges of the hinge patch are welded to front and rear inner walls (11B, 11C) of the front pillar.

Further, the bulkhead piece (38) of the hinge patch may extend from at least one of upper and lower edge of the central part (32A), and may be provided with an upwardly bent front flange (38B) and an upwardly bent rear flange (38A), the front and rear flanges of the bulkhead piece being welded to front and rear inner walls of the front pillar.

Preferably, the central part (32A) of the hinge patch is formed with a bulge having a top surface (32B) abutting and welded to a front pillar inner panel (10A) of the front pillar, and a fastener (36) for securing the upper door hinge to the front pillar is passed through the bulge of the hinge patch.

According to another aspect of the present invention, the vehicle body side structure may further comprise a center pillar (14) extending vertically behind the front pillar so as to define the door opening for the front door (20) jointly with the front pillar; and a center pillar bulkhead member (47) extending between front and rear walls (19B, 19C) of the center pillar at a position overlapping at least partly with the third reinforcing member (48) as seen in the fore and aft direction.

According to a preferred embodiment of present invention, the third reinforcing member comprises a door beam member (48) including an upper edge at least partly defining a lower edge of a window opening of the front door, and a rear end of the door beam member is provided with a local extension (48D, 48E) that is positioned to oppose a part of the center pillar adjacent to the center pillar bulkhead member when the front door is closed.

Thereby, the frontal crash load that may be transmitted by the door beam member is transmitted to a part of the center pillar which is reinforced by the center pillar bulkhead member and which may be somewhat below the part of the center pillar adjacent to a rear edge of the window opening of the front door so that the crash load that is transmitted by the door beam member is favorably transmitted to the rear part of the vehicle body while avoiding a relatively weak upper part of the center pillar (door sash part) which is adjacent to a rear edge of the window opening of the front door.

Typically, the center pillar (14) comprises a center pillar outer panel (15), a center pillar inner panel (17) configured to form a closed cross section with the center pillar inner panel, and a center pillar stiffener (19) interposed between the center pillar inner panel and center pillar outer panel, and the center pillar bulkhead member (48) is attached to the center pillar stiffener.

Preferably, the center pillar bulkhead member includes a horizontal center plate (47A), a front flange (47B) bent upward from the center plate, a rear flange (47C) bent upward from the center plate and a side flange (47D) bent upward from the center plate which are welded to front wall (19B), rear wall (19C) and side wall (19D) of the center pillar stiffener, respectively.

For the convenience of positioning the center pillar bulkhead member during the assembly work thereof, the side flange (47D) of the center pillar bulkhead member may be formed with an opening (47G), and the center pillar stiffener and center pillar inner panel may be formed with mutually aligning holes that also align with the opening of the side flange.

### BRIEF DESCRIPTION OF THE DRAWINGS

Now the present invention is examplarily described in the following with reference to the appended drawings, in which:
Figure 1 is a fragmentary perspective view of a front side part of a vehicle body generally illustrating a first embodiment of the present invention;
Figure 2 is a right side view of the vehicle body shown in Figure 1;
Figure 3 is a fragmentary exploded perspective view of a front pillar area of the embodiment shown in Figure 1;
Figure 4 is an enlarged sectional view of Figure 1 taken along a plane indicated by letter A;
Figure 5 is an enlarged sectional view of Figure 1 taken along a plane indicated by letter B;
Figure 6 is an enlarged sectional view of Figure 1 taken along a plane indicated by letter C;
Figure 7 is a fragmentary perspective view of a front side part of a vehicle body generally illustrating a second embodiment of the present invention;
Figure 8 is a fragmentary side view of an outer shell of the left side of the vehicle body as seen from inside the vehicle;
Figure 9 is an enlarged fragmentary perspective view of a left front pillar as seen from outside the vehicle;
Figure 10 is an enlarged fragmentary side of a hinge patch for the left front pillar as seen from inside the vehicle with the inner pillar panel removed;
Figure 11 is a fragmentary sectional view of the right front pillar taken along line XI-XI of Figure 10;
Figure 12 is a view similar to Figure 10 showing a modified embodiment of the hinge patch for the left front pillar;
Figure 13 is an enlarged fragmentary perspective view of a left center pillar as seen from outside the vehicle with the inner pillar panel removed;
Figure 14 is a fragmentary sectional view of the right center pillar taken along line XIV-XIV of Figure 13; and
Figure 15 is a fragmentary sectional view of the right center pillar taken along line XV-XV of Figure 13.

### DETAILED DESCRIPTION OF THE PREFERRED EMBODIMENTS

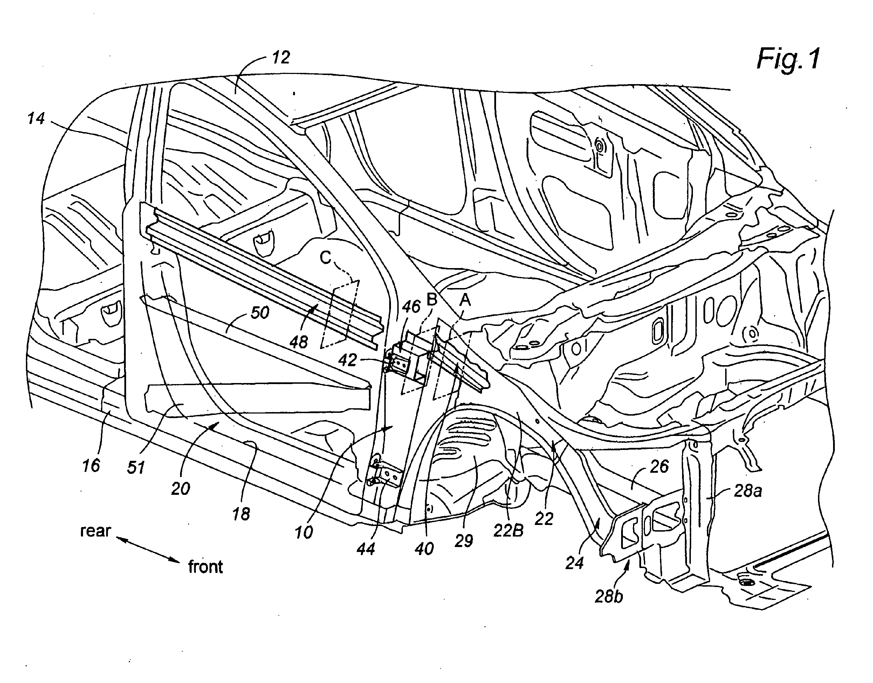

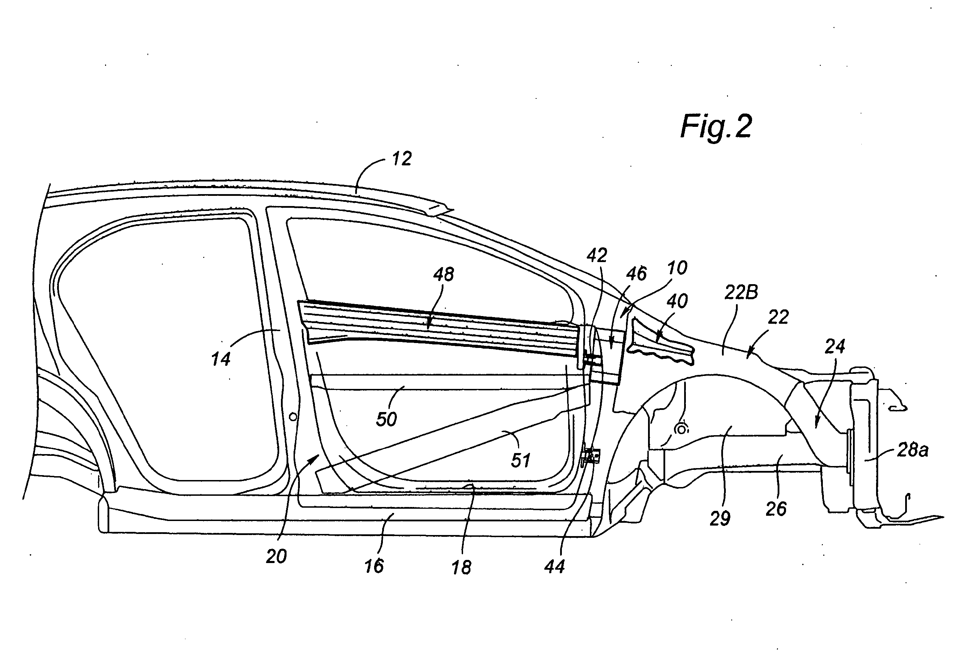

Referring to Figures 1 and 2, the vehicle body side structure of the illustrated embodiment is mostly symmetric with respect to a longitudinal line of the vehicle body, and the drawings show the vehicle body left side structure. A door opening 18 for a front door 20 is defined by a front pillar 10, a roof rail 12, a center pillar 14 and a side sill 16. In the illustrated embodiment, the front pillar 10 includes a lower part extending vertically along a side edge of a bulkhead separating a passenger compartment from an engine room, and an upper part slanted in a rearward direction and smoothly connected to the front end of the roof rail 12.

An upper member (wheelhouse upper member) 22 extends forward from a middle part of the front pillar 10 intermediate between the upper and lower parts thereof. A front end of the upper member 22 is connected to a lower member (wheelhouse lower member) 24 that curves downward. A front side frame 26 extends from a lower part of the engine room bulkhead in parallel with the upper and lower members 22 and 24 on an inboard side thereof, and has a free end or front end secured to a bulkhead side member 28a extending vertically to define a side of an opening for receiving a radiator. The front end of the lower member 24 is also connected to the bulkhead side member 28a via a laterally extending connecting member 28b. Also, a damper housing 29 extends between the upper member 22 and the front side frame 26 to define a wheelhouse and provide a reinforced support for an upper end of a wheel suspension system.

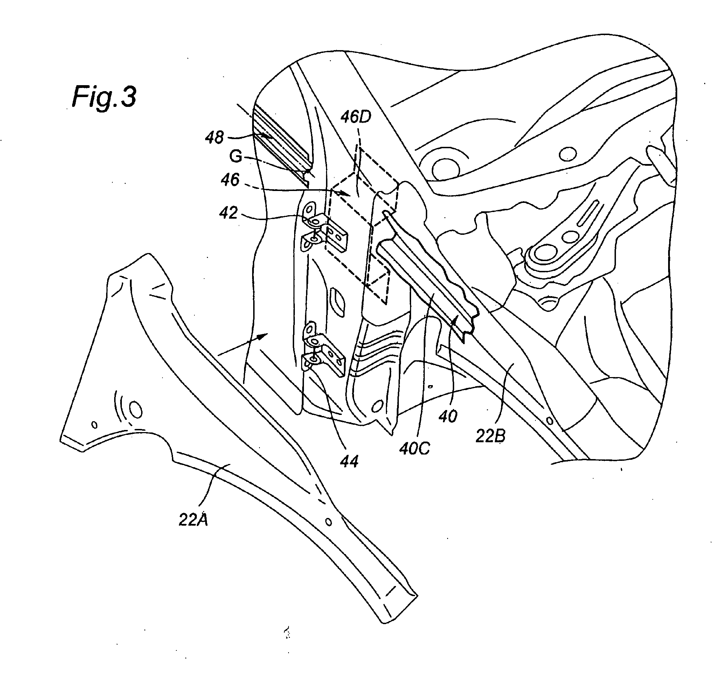

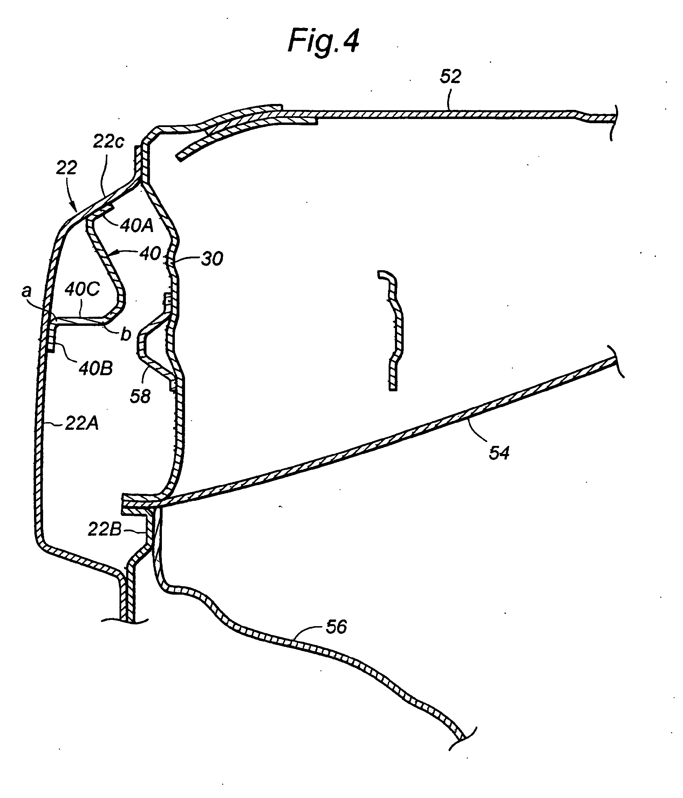

The vehicle body side structure of the illustrated embodiment is described in the following in greater detail with reference to Figures 1 to 6. As best shown in Figures 3 and 4, a front part of the upper member 22 is formed by combining an outer upper member 22A and an inner upper member 22B so as to have a closed cross section. In a rear part of the upper member 22, the inner side thereof is jointly formed by an dashboard side member 30 having an upper end structurally connected to an upper end of the outer upper member 22A and a side edge of a front windshield support panel 52, and a lower end structurally connected to the side edges of an upper dash panel 54 and a lower upper dash panel 56 and an upper end of the inner upper member 22B. The outer upper member 22A, dashboard side member 30 and inner upper member 22B jointly form a closed section in the rear part of the upper member 22. A dashboard side member stiffener 58 having a hat-shaped cross section is welded to the inner side of the dashboard side member 30.

An upper member stiffener 40 having a hat-shaped cross section is attached to the inner side of the outer upper member 22A, and extends from the front pillar 10 in the forward direction. The upper member stiffener 40 is attached to the inner side of the outer upper member 22A by using upper and lower welding flanges 40A and 40B formed along either side edge thereof so as to form a closed cross section in cooperation with the outer upper member 22A. The upper member stiffener 40 further includes a horizontal section 40C located adjacent to the lower welding flange 40B and extending substantially horizontally in the fore and aft direction of the vehicle body. Therefore, a bend line (a) between the lower welding flange 40B and horizontal section 40C, and a bend line (b) between the horizontal section 40C and remaining part of the upper member stiffener 40 are defined so as to extend in the fore and aft direction on either lateral end of the horizontal section 40C.

In the illustrated embodiment, the outer upper member 22A includes a bent portion 22C (see Figure 4) which is bent inward adjacent to the junction between the front pillar 10 and upper member 22. The lower welding flange 40A of the upper member stiffener 40 is welded to a vertical wall of the outer upper member 22A whereas the upper welding flange 40A of the upper member stiffener 40 is shaped so as to conform to the inner surface of the bent portion 22C which is at an angle to the vertical wall of the outer upper member 22A, and is welded thereto.

Therefore, even when the vehicle body design requires the upper member 22 to sharply slant downward toward the front part thereof, the upper member stiffener 40 may be provided with a horizontal section 40C of a desired size which is effective in supporting the load of a frontal crash without any difficulty so that the freedom in the vehicle body design can be improved.

Although not shown in the drawings, the lower member 24 is also formed into a closed cross section by combining an outer lower member and an inner lower member, similarly as the upper member 22.

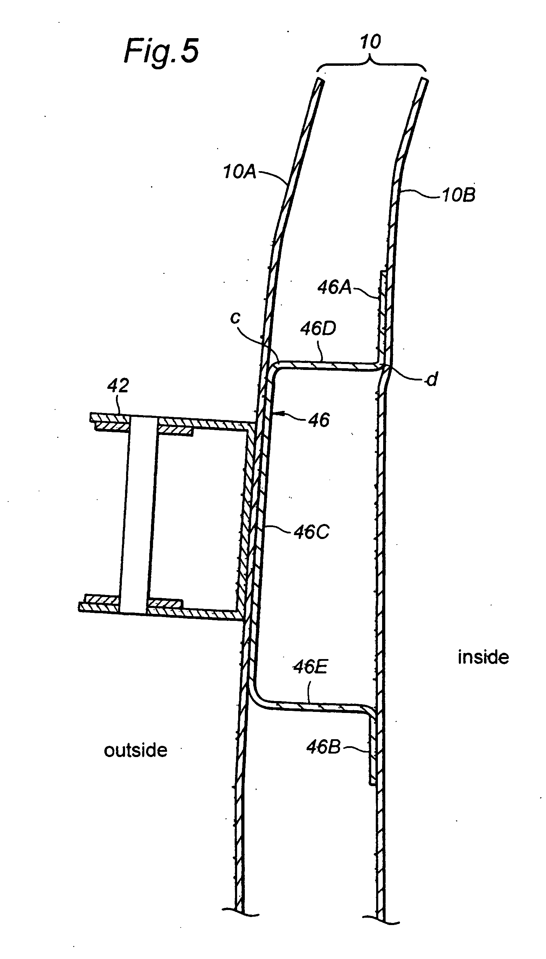

As shown in Figure 5, the front pillar 10 is formed by combining an outer pillar panel 10A and an inner pillar panel 10B so as to have a closed cross section. As shown in Figures 1 to 3, upper and door hinges 42 and 44 for a front door 20 are attached to the outer side of the outer pillar panel 10A. The upper and door hinges 42 and 44 allow the front door 20 to be opened and closed.

A door hinge reinforcing member (hinge patch) 46 is attached to a part of the inner side of the front pillar 10 that corresponds to the upper door hinge 42 to reinforce the part thereof supporting the upper door hinge 42. More specifically, the door hinge reinforcing member 46 includes a middle piece 46C extending vertically in the fore and aft direction, and welded to the outer pillar panel 10A, upper and lower horizontal pieces 46D and 46E bent laterally inward from the upper and lower ends of the middle piece 46C to the inner pillar panel 10B, and welding pieces 46A and 46B extending vertically away from each other from the free ends of the upper and lower horizontal pieces 46D and 46E, respectively, and welded to the inner pillar panel 10B. The bend line (as indicated by c in Figure 5) between the middle piece 46C and upper horizontal piece 46D, and the bend line (as indicated by d in Figure 5) between the upper horizontal piece 46D and welding piece 46A extend in the fore and aft direction. The lower part of the door hinge reinforcing member 46 are also provided with two more similar bend lines. Thus, the door hinge reinforcing member 46 is provided with a hat-shaped cross section as seen in the fore and aft direction. The middle piece 46C may be attached to the outer pillar panel 10A alternatively or additionally by using threaded bolts.

Thus, the door hinge reinforcing member 46 forms a closed cross section in cooperation with the inner pillar panel 10B. Furthermore, the upper and lower horizontal pieces 46D and 46E extend between the outer and inner pillar panels 10A and 10B, and form a kind of bulkhead structure which is effective in reinforcing the center pillar 10.

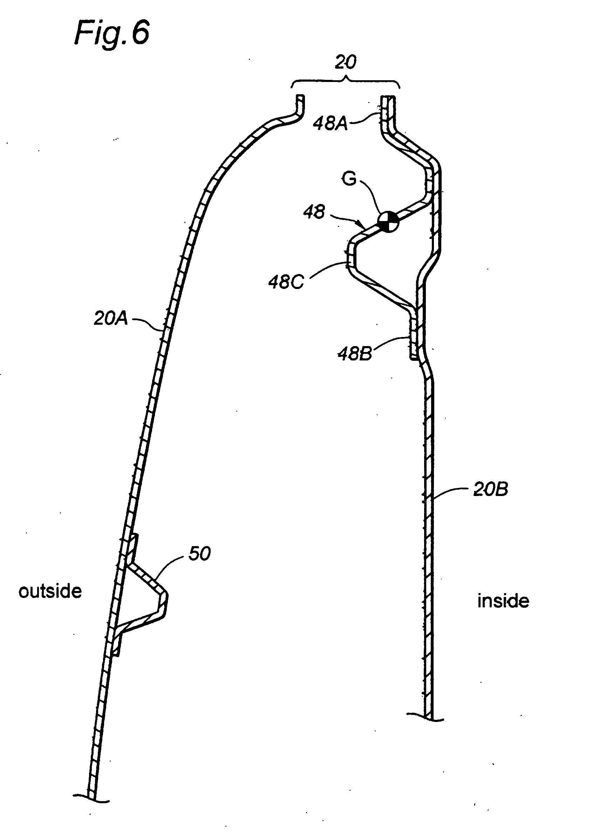

As shown in Figure 6, the front door 20 is formed by combining an outer door panel 20A and an inner door panel 20B. As shown in Figures 1 and 2, a door beam member 48 extends along the upper edge of the inner door panel 20B in the fore and aft direction, and is attached thereto by welding. The door beam member 48 has an S-shaped cross section, and extends over the entire width or the entire fore and aft extent of the inner door panel 20B. An upper part or upper welding piece 48A of the door beam member 48 closely overlies the inner side of the upper part of the inner door panel 20B, and is welded thereto. A lower part or lower welding piece 48B of the door beam member 48 likewise overlies the inner side of the upper part of the inner door panel 20B, and is welded thereto. A middle channel-shaped part 48C having a concave side facing the inner door panel 20B thereby defines a closed close section jointly with the inner door panel 20B with the aid of the upper welding piece 48A and lower welding piece 48B. A pair of door beams 50 and 51, each having a hat-shaped cross section, are similarly attached to the inner side of the outer door panel 20A for protecting the vehicle occupant from a side crash as shown in Figures 1, 2 and 6.

The door beam member 48 is given with a S-shaped cross section, and extends on the outboard side of the inner door panel 40B in the fore and aft direction substantially horizontally over the entire width of the inner door panel 20B, and includes upper and lower welding pieces (flanges) 48A and 48B by which the door beam member 48 is welded to the inner door panel 20B, and a channel section 48C bulging away from the inner door panel 20B between the two welding pieces 48A and 48B. Therefore, the door beam member 48 forms a closed cross section jointly with he inner door panel 20B.

To the inboard side of the outer door panel 20A are attached a pair of door beam members 50 and 51 for reinforcing the door against a side impact (see Figures 1 and 2).

It should be noted that the upper member stiffener 40, door hinge reinforcing member 46 and door beam member 48 are in a mutually overlapping relationship when viewed in the fore and aft direction, or align linearly in a horizontal direction. In particular, the horizontal section 40C of the upper member stiffener 40, the upper horizontal piece 46D of the door hinge reinforcing member 46 and the centroid G of the cross section of the door beam member 48 substantially align one another as seen in the fore and aft direction, and this enhances a favorable transmission of a frontal impact load from the upper member to the rear part of the vehicle body via the front pillar 10 and door beam member 48.

Owing to this overlapping relationship, a frontal impact load is transmitted from the upper member 22 to the front pillar 10, and from the front pillar 10 to the door beam member 48 along a continuous linear path so that the front impact load that is applied to the upper member 22 can be transmitted to the rear part of the vehicle via the front pillar 10 and door beam member 48 in a favorable manner.

In particular, because the mutually overlapping parts align linearly in a horizontal direction, the frontal impact load applied to the upper member 22 can be transmitted to the rear part of the vehicle via the front pillar 10 and door beam member 48 in an efficient manner without causing an excessive bending moment to the front pillar 10.

In the illustrated embodiment, the horizontal section 40C of the upper member stiffener 40 which is effective in transmitting a frontal crash load coincides with the upper horizontal piece 46D of the door hinge reinforcing member 46 that extends across the outer and inner panels 10A and 10B of the front pillar 10 and the centroid G of the S shaped cross section 48 of the door beam member 48 as seen in the fore and aft directin.

Therefore, a continuous linear and horizontal load transmission path having an increased stiffness is defined from the upper member 22 to the door beam member 48 via the front pillar 10 so that the frontal crash load applied to the upper member 22 can be transmitted to the rear part of the vehicle body via the front pillar 10 and door beam member 48 in a highly efficient manner.

Also, the horizontal piece 40C of the upper member stiffener 40 is provided with bend lines or ridges (a and b) extending in the fore and aft direction on either lateral side thereof, and the horizontal piece 46D of the door hinge reinforcing member 46 is provided with similar bend lines or ridges (c and d). Therefore, these horizontal piece 40C and 46D demonstrate a high mechanical strength and stiffness against the fore and aft load acting on them.

Thereby, the horizontal piece 40C of the upper member stiffener 40 and the horizontal piece 46D of the door hinge reinforcing member 46 can transmit the frontal crash load without involving any excessively deformation.

As the door beam member 48 is provided with a S-shaped cross section, even when the front door 20 has a relatively large lateral thickness, the centroid G of the S-shaped cross section of the door beam member 48 can be made coincide with the path of load transmission (particularly with respect to the lateral positions thereof) as seen in the fore and aft direction so that the transmission of the frontal impact load to the door beam member 48 can be effected in an efficient and favorable manner.

The upper member stiffener 40 and door hinge reinforcing member 46 both form closed cross sections within the upper member 22 and front pillar 10, respectively, and the upper member 22, front pillar 10 and inner door panel 20B which also form closed cross sections are aligned in the fore and aft direction. Therefore, these members are enabled to transmit the frontal impact load to the door beam member 48 in a favorable manner without involving excessive deformation, and the mechanical strength and stiffness of the front pillar 10 and inner door panel 20B against the fore and aft load is significantly improved.

In particular, because the door hinge reinforcing member 46 separates the interior of the front pillar 10 by extending across the cross section thereof just like a bulkhead, the front pillar 10 can be significantly reinforced in mechanical strength and stiffness.

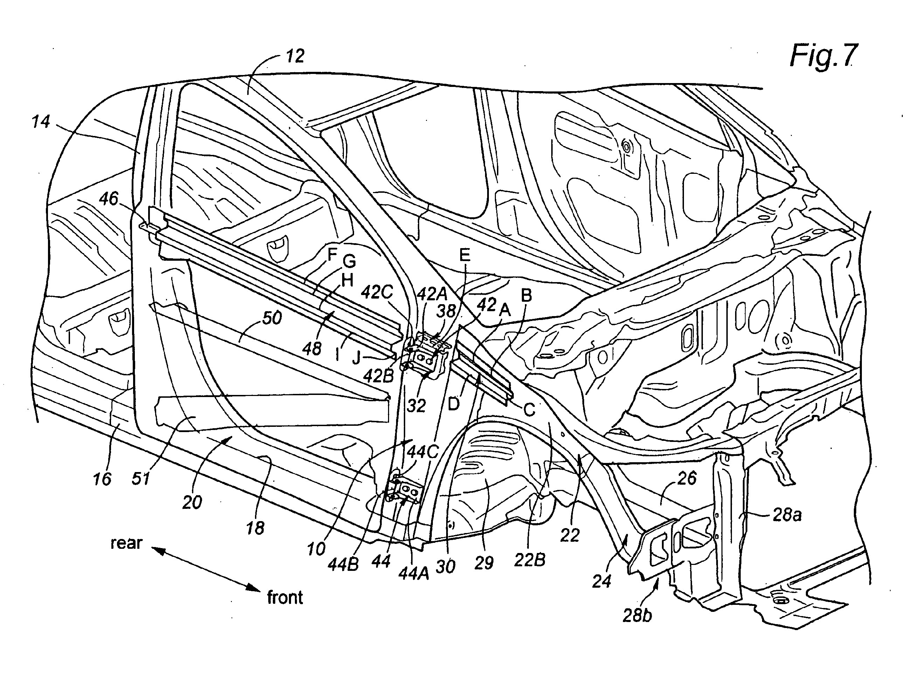

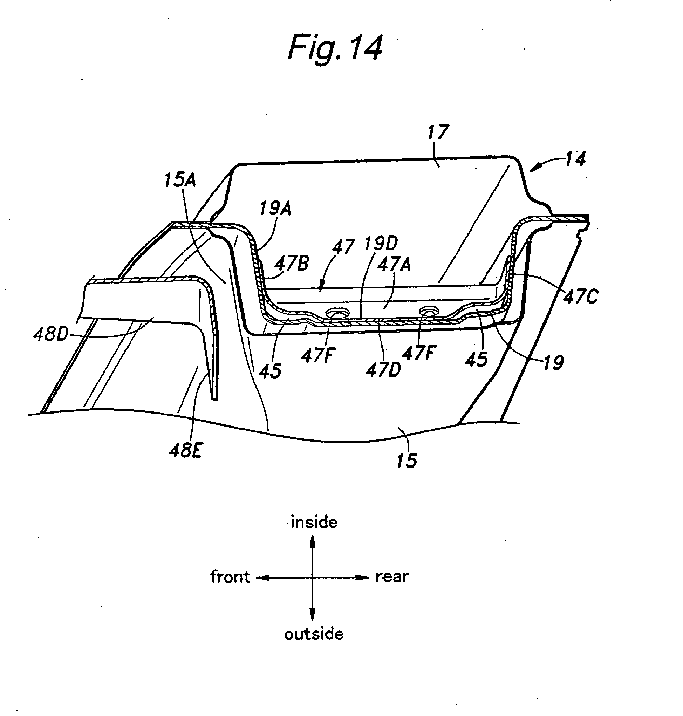

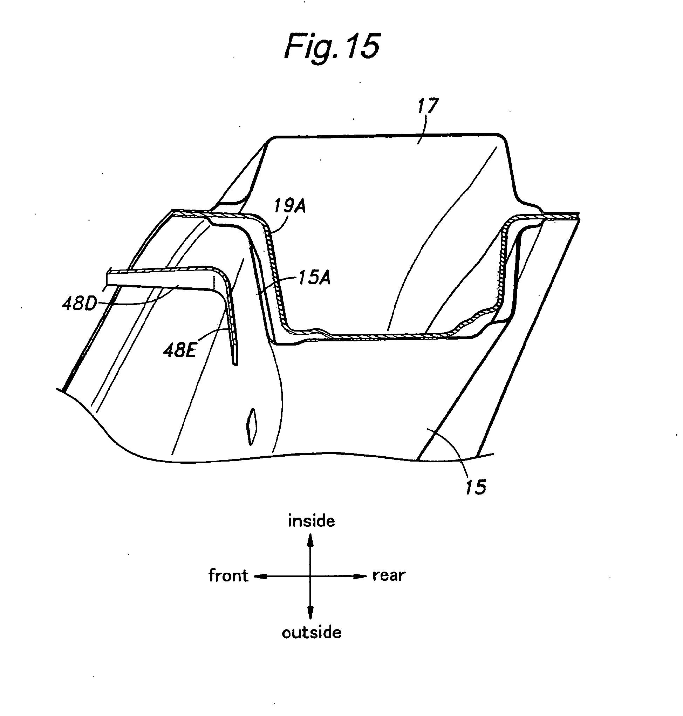

Figures 7 to 15 show a second embodiment of the present invention. In Figures 7 to 15, the parts corresponding to those of the first embodiment are denoted with like numerals, and the description of such parts may be omitted when appropriate.

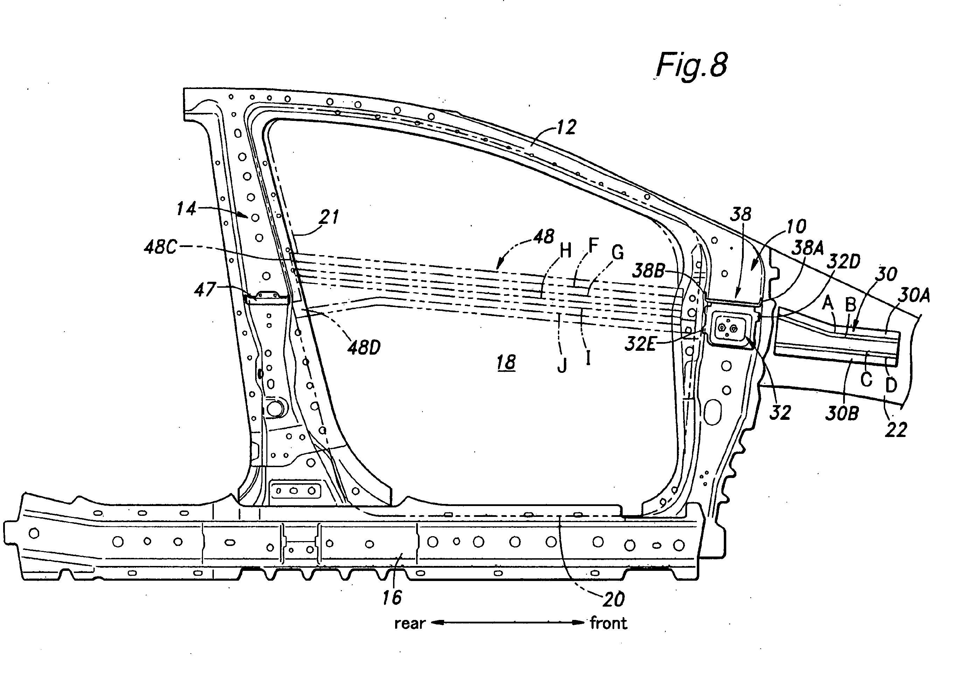

To the inner side of the upper member 22 adjacent to the junction with the front pillar 10 is attached an upper member stiffener 30 having a hat-shaped cross section defined by four bending lines (ridges) A, B, C and D extending in the fore and aft direction as best illustrated in Figures 7 and 8. The upper member stiffener 30 is welded to the inner side of an upper part of the outer panel 22A of the upper member 22 and an upper part of the inner panel 22B via upper and lower welding pieces 30A and 30B thereof defined by the bending lines A and D extending in the fore and aft direction. The rear end of the upper member stiffener 30 adjacent to the front pillar 10 is in close proximity to the front side of the front pillar 10 or, in particular, to a hinge patch 32 including a bulkhead piece 38 which will be described hereinafter. Owing to the four bending lines (ridges) A, B, C and D extending in the fore and aft direction, the upper member stiffener 30 demonstrates a high stiffness against a fore and aft loading applied thereto.

The above discussed structure of the upper member stiffener 30 is merely exemplary, and the upper member stiffener 30 have any configuration as long as it serves as a major structure component of the upper member 22.

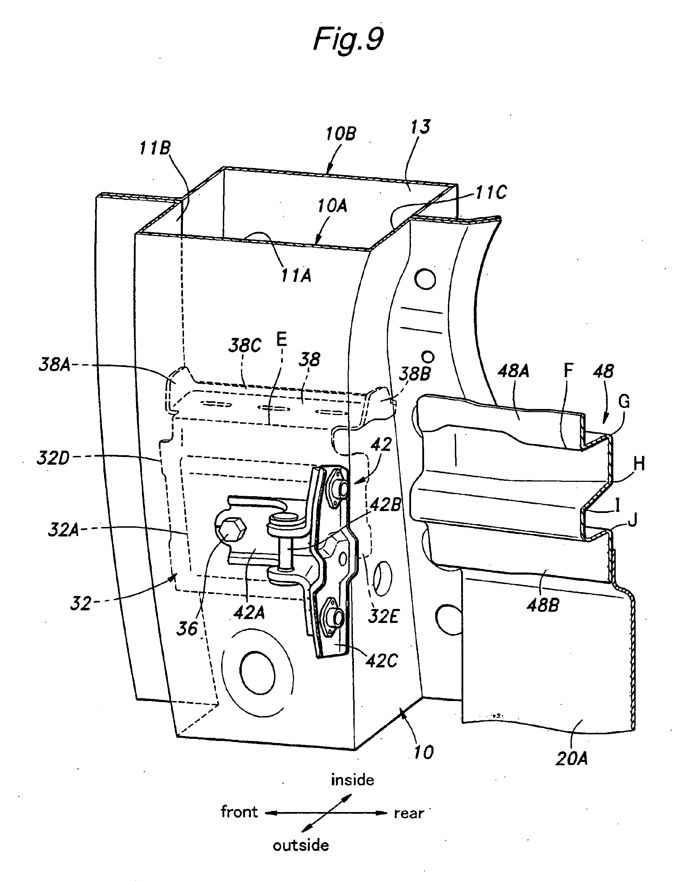

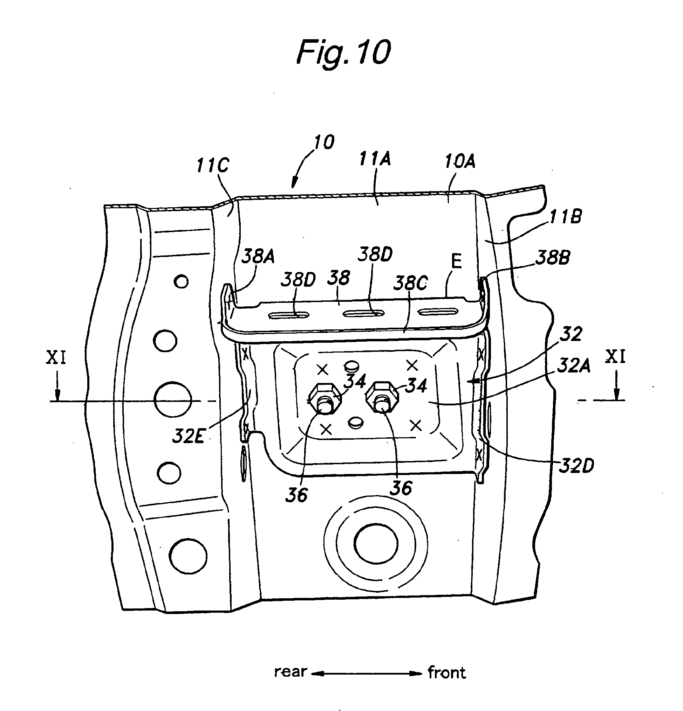

As shown in Figures 9 and 10, the front pillar 10 is formed by an outer pillar panel 10A and an inner pillar panel 10B both having a hat-shaped cross section so as to jointly define a closed cross section. To the outer pillar panel 10A are attached an upper door hinge 42 and a lower door hinge 44 as best shown in Figures 7 and 9. The mounting structure for the upper door hinge 42 as well as the structure of the upper door hinge 42 and lower door hinge 44 is described in the following in more detail.

The upper door hinge 42 includes a pillar side member 42A secured to the front pillar 10, a vertically extending hinge shaft 42B fixedly secured to the pillar side member 42A and a door side member 42C secured to the front door 20 and rotatably supported by the hinge shaft 42. Similarly, the lower door hinge 44 includes a pillar side member 44A secured to the front pillar 10, a vertically extending hinge shaft 44B fixedly secured to the pillar side member 44A and a door side member 44C secured to the front door 20 and rotatably supported by the hinge shaft 44. The pillar side members 42A and 44A of the upper and lower door hinges 42 and 44 are attached to the outer side of the outer pillar panel 10A, and the door side members 42C and 44C are attached to the front end of the front door 20.

A hinge patch 32 is welded to the inner side of the outer pillar panel 10A at a position corresponding to the pillar side member 42A of the upper hinge 42 so as to interpose the outer pillar panel 10A between the hinge patch 32 and the pillar side member 42A. The hinge patch 32 is rectangular in shape, and is provided with a rectangular central bulge 32A formed by drawing so as to project toward the outer pillar panel 10A. The central bulge 32A has a flat top surface 32B by which the hinge patch 32 abuts the corresponding part of the outer pillar panel 10A. The hinge patch 32 thus serves as a backing plate for the part of the outer pillar panel 10A supporting the pillar side member 42A of the upper hinge 42. As shown in Figure 10, the central bulge 32A is welded to the outer pillar panel 10A at four spots (as indicated by "X" in Figure 10) in the area of the flat top surface 32B by spot welding. The periphery of the central bulge 32A is defined by two concentric rectangular bending lines which increase the stiffness of the hinge patch 32.

The front edge and rear edge of the hinge patch 32 are bent laterally (inward) by about 90 degrees, and thereby define a pair of welding flanges 32D and 32E. The welding flanges 32D and 32E are configured to abut (or make a surface contact with) the inner sides of front wall 11B and rear wall 11C of the outer pillar panel 10A which are bent from a side wall 11C of the outer pillar panel 10A, respectively, and are welded thereto each at a plurality of points by spot welding (as indicated by "X" in Figure 10).

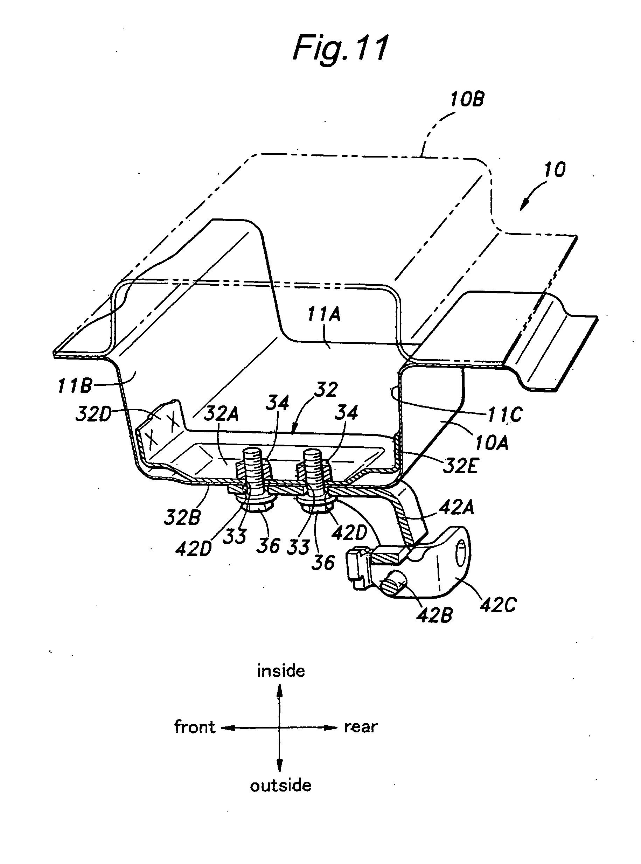

A pair of through holes 33 are passed through the central bulge 32A of the hinge patch 32 and the outer pillar panel 10A, and a nut 34 is welded to inner side of the central bulge 32A at the opening of each of these through holes 33. A pair of corresponding through holes 42D are formed in the pillar side member 42A of the upper hinge 42 so that a threaded bolt 36 may be passed through each group of the through holes 42D and 33 of the pillar side member 42A of the upper hinge 42, the outer pillar panel 10A and hinge patch 32, and threaded into the corresponding nut 34 so that the pillar side member 42A of the upper hinge 42 can be firmly attached to the front pillar 10 as best shown in Figure 11.

The upper end of the hinge patch 32 is bent laterally (inward) by about 90 degrees, and forms a bulkhead piece 38 which extends horizontally between the front and rear walls 11B and 11C of the outer pillar panel 10A. Thus, the hinge patch 32 has an L shaped cross section as seen in the fore and aft direction.

The front and rear edges of the bulkhead piece 38 are bent upward by an angle of 90 degrees to thereby form a pair of welding flanges 38A and 38B. The front welding flange 38B makes a surface contact to the front wall 11B of the outer pillar panel 10A inside the front pillar 10, and the rear welding flange 38A likewise makes a surface contact to the rear wall 11C of the outer pillar panel 10A inside the front pillar 10. The welding flanges 38A and 38B are spot welded to the front and rear walls 11B and 11C of the outer pillar panel 10A, respectively, as indicated by "X" in Figure 10.

The free end of the bulkhead piece 38 (remote from the side wall 11A of the outer pillar panel 10A) is bent upward by an angle of 90 degrees to form a reinforcement flange 38C that is connected to the front and rear welding flanges 38A and 38B. The bulkhead piece 38 is formed with a plurality of openings 38D for draining water that may be deposited on the upper surface of the bulkhead piece 38.

The hinge patch 32 and bulkhead piece 38 are formed as a single component formed by stamp forming a single blank piece. In particular, the presence of the bending line (ridge) E (see Figures 9 and 10) between the main body of the hinge patch 32 and bulkhead piece 38 is highly effective in reinforcing the supporting structure for the upper door hinge 42 and increasing the stiffness of the front pillar 10 against the compressive load in the fore and aft direction.

Thereby, the deformation of the front pillar 10 at the time of a frontal crash can be favorably controlled, and the front pillar 10 is enabled to favorably transmit the frontal crash load to the rear part of the vehicle body.

This effect is particularly enhanced by the presence of the 90-degree bending line E that separates the hinge patch 32 into the vertical main part and the horizontal bulkhead piece 38 in the shape of letter-L.

As the hinge patch 32 is welded to the front and rear walls 11B and 11C of the outer pillar panel 10A (or the front pillar 10) at the respective welding flanges 32D and 32E, the mounting point for the upper door hinge 42 is reinforced against a twisting moment, and the main body of the hinge patch 32 also contributes to the increase in the stiffness of the front pillar 10 against the compressive load in the fore and aft direction. The latter also contributes to the enhancement of the favorable transmission of the frontal crash load to the rear part of the vehicle body.

The presence of the reinforcement flange 38C in the bulkhead piece 38 improves the bending stiffness thereof when subjected to a fore and aft loading, and this also contributes to the improvement in the stiffness of the front pillar 10 against the compressive load in the fore and aft direction, and enhancement of the favorable transmission of the frontal crash load to the rear part of the vehicle body. The central bulge 32A stamp formed in the hinge patch 32 increases the stiffness of the hinge patch 32, and this contributes to the increase in the mechanical strength of the part of the front pillar 10 supporting the upper door hinge 42.

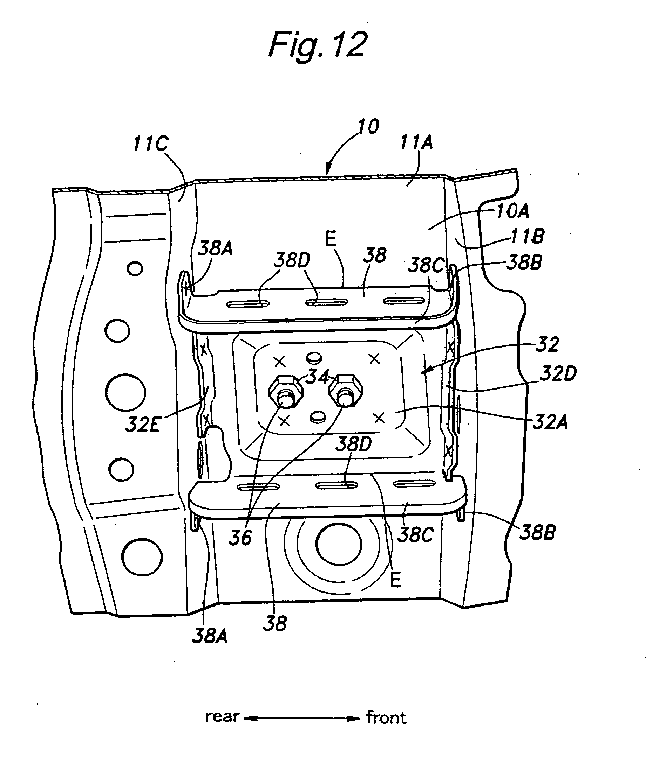

Figure 12 shows a modified embodiment of the hinge patch 32. In the foregoing embodiment, the bulkhead member 38 was provided only on the upper edge of the hinge patch 32. But the bulkhead member 38 may be provided on the lower edge of the hinge patch 32. If desired, the bulkhead member 38 may be provided on each of the lower edge and upper edge of the hinge patch 32 as illustrated in Figure 12. The front and rear welding flanges 38A and 38B of the lower bulkhead member 38, as well as the reinforcement flange 38C, are bent downward. By providing two bulkhead members 38 for the hinge patch 32, the reinforcement effect of the hinge patch 32 can be further increased.

The front door 20 is formed by joining the inner door panel 20A and an outer door panel 20B, and a door beam member 48 extending horizontally in the fore and aft direction is attached to the inner door panel 20A along the upper edge thereof as shown in Figures 7 and 8. The door beam member 48 has a rectangular cross section defined by a plurality of bending lines F, G, H, I and J (see Figures 7 to 9) extending in the fore and aft direction, and includes a lower piece 48B welded to the upper edge of the inner door panel 20A, and an upper piece 48A defining a lower edge of the window opening of the front door 20.

The front end of the door beam member 48 is located adjacent or in close proximity to the rear face of the front pillar 10 or, the rear end of the hinge patch 32 including the bulkhead piece 38 when the front door 20 is closed. The door beam member 48 is provided with a high bending stiffness owing to the presence of the bending lines F, G, H, I and J.

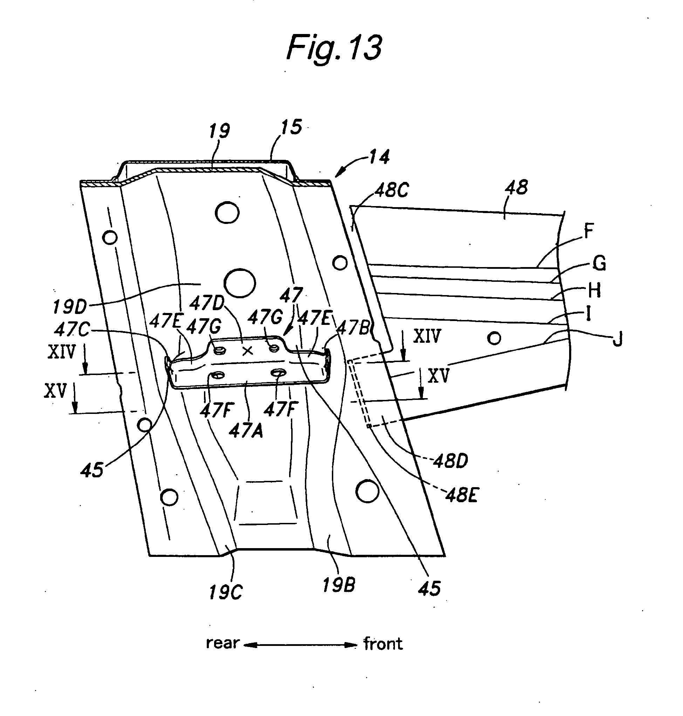

As shown in Figures 13 to 15, the center pillar 14 is formed by joining an outer pillar panel 15 and a center pillar inner (inner pillar panel) 17, each having a hat-shaped cross section so as to form a closed cross section. A center pillar stiffener 19 made of a high tensile strength steel channel member is attached to the inner side of the outer pillar panel 15. In the illustrated embodiment, the center pillar stiffener 19 includes a central channel section 19A and a pair of lateral welding pieces 19B and 19C so as to define a hat shaped cross section. These welding pieces 19B and 19C are interposed between similar welding pieces of the outer pillar panel 15 and inner pillar panel 17 when the outer pillar panel 15 and inner pillar panel 17 are joined together so to jointly form a front and rear flange of the center pillar 14.

As shown in Figures 13 to 15, the rear end of the door beam member 48 is slightly extended downward (hence broadened), and a lower part of the rear end of the door beam member 48 is provided with a local extension 48D extending more rearward than the remaining part 48C thereof devoid of the local extension 48D. The local extension 48D is located adjacent to the rear flange of the center pillar 14 from outboard side thereof when the front door 20 is closed, and has a free end 48E which is bent laterally outward so as to oppose the front wall of the center pillar 14 (or the outer panel 15 thereof) at a small gap. The lower bending line J extends to the local extension 48D.

A pair of door beams 50 and 51, each having a hat-shaped cross section, are similarly attached to the inner side of the outer door panel 20A for protecting the vehicle occupant from a side crash as shown in Figure 7.

A center pillar bulkhead member 47 is attached to the inner side of the center pillar stiffener 19. The center pillar bulkhead member 47 comprises a substantially horizontal center plate 47A, a front flange 47B bent upward from the front edge of the center plate 47A, a rear flange 47C bent upward from the rear edge of the center plate 47A, and a side flange 47D bent upward from a side edge of the center plate 47A adjacent to the center pillar stiffener 19. A pair of connecting flanges 47E that are bent upward from the center plate 47A connect the side flange 47D with the front flange 47B and the rear flange 47C. The center pillar bulkhead member 47 can be made by stamp forming a single piece of steel plate.

The center plate 47A of the center pillar bulkhead member 47 is located so as to overlap with the door beam member 48 and, in particular, at least partly with the local extension 47D thereof as seen in the fore and aft direction, and the front and rear flanges 47B and 47C make surface contact with and welded to the front and rear walls 19B and 19C of the center pillar stiffener 19 from inside. The side flange 47D also makes a surface contact with and welded to the channel section 19A of the center pillar stiffener 19. The transmission of the frontal impact load from the door beam member 48 to the center pillar 14 is made via the part of the center pillar which is reinforced by the center plate 47A of the center pillar bulkhead member 47, and the addition of the center pillar bulkhead member 47 is highly effective in controlling the deformation of the center pillar 14 against the frontal crash load, and this contributes to the efficient transmission of the frontal crash load to the rear part of the vehicle body.

The center pillar bulkhead member 47 forms a first closed cross section 45 in cooperation with the corner between the front wall 19B and channel section 19A of the center pillar stiffener 19, and a second closed cross section 45 in cooperation with the corner between the rear wall 19C and channel section 19A of the center pillar stiffener 19. This clearly increases the stiffness of the center pillar 14 against the fore and aft compressive load.

The side flange 47D of the center pillar bulkhead member 47 is formed with a pair of positioning holes 47G that may be aligned with the corresponding positioning holes (not shown in the drawings) formed in channel section 19A of the center pillar stiffener 19 and outer panel 15 for properly positioning the center pillar bulkhead member 47. The center plate 47A is formed with a plurality of draining holes 47F.

The transmission of the frontal impact load from the door beam member 48 to the center pillar 14 is effected via the local extension 48D which is located at some distance below the lower edge of a window opening of the front door 20. Therefore, at the time of a frontal crash, the upper part of the center pillar 14 which is adjacent to the window opening of the front door 20 and forms a relatively weak door sash 21 is placed out of the path of the transmission of the frontal impact load, and thereby spared from the direct impact upon occurrence of a frontal crash. As the remaining part 48C of the door beam member 48 devoid of the local extension 48D extends to a proximity of the front walls 15A and 19A of the outer panel 15 and center pillar stiffener 19, these parts also contribute to the favorable transmission of the frontal impact load from the door beam member 48 to the center pillar 14 when the crash is severe enough to cause a significant deformation of the door beam member 48.

As the center pillar bulkhead member 47 is joined to the three walls of the center pillar stiffener 19, that are at an angle to one another, from inside the center pillar 14, the center pillar bulkhead member 47 can be firmly attached to the center pillar stiffener 19 so that the center pillar bulkhead member 47 is highly effective in controlling the deformation of the center pillar 14 against the frontal crash load transmitted by the door beam member 48, and this contributes to the efficient transmission of the frontal crash load to the rear part of the vehicle body.

In this embodiment also, particular, the horizontal section 40C of the upper member stiffener 40, the bulkhead piece 38 of the hinge patch 32 and the centroid G of the cross section of the door beam member 48 substantially align one another as seen in the fore and aft direction, and this enhances a favorable transmission of a frontal impact load from the upper member to the rear part of the vehicle body via the front pillar 10 and door beam member 48.

Also, the welding flanges 47B, 47C and 47D, and connecting flanges 47E improve the bending stiffness of the center pillar bulkhead member 47, and this ensures a reliable reinforcement of the center pillar 14 by the center pillar bulkhead member 47.

Although the present invention has been described in terms of preferred embodiments thereof, it is obvious to a person skilled in the art that various alterations and modifications are possible without departing from the scope of the present invention which is set forth in the appended claims.

A vehicle body side structure includes a wheelhouse upper member (22) reinforced by an upper member stiffener (40), a front pillar (10) reinforced by a hinge patch (46; 32) attached to an inner side of the front pillar and a front door (20) reinforced by a door beam member (48), and these reinforcement members include mutually at least partly overlapping parts as seen in the fore and aft direction so that a frontal crash load can be favorably transmitted from the upper member to a rear part of the vehicle body substantially in a linear path. The hinge patch serves as a backing plate for an upper hinge (24) of the front door, and may include a bulkhead piece (46D, 46E; 38) that extends across and welded to opposing inner walls (10A, 10B) of the front pillar (10).

## Claims

1. A vehicle body side structure, comprising
a front pillar (10) having a closed cross section and including a vertical lower part;
an upper member (22) extending forward from a middle part of the front pillar in a forward direction of the vehicle body and also having a closed cross section;
a front door (20) hinged to the front pillar for selectively closing an opening defined behind the front pillar;
a first reinforcing member (40) attached to an inner side of the upper member and extending in a fore and aft direction of the vehide body;
a second reinforcing member (46; 32) attached to an inner side of the front pillar and
a third reinforcing member (48) attached to an inner panel (20B) of the front door and extending in the fore and aft direction of the front door **characterized in that** the first reinforcing member is provided with a hat-shaped cross section including a substantially horizontal section (40c), **in that** the second reinforcing member includes a horizontal piece (46D), **in that** the third reinforcing member includes upper and lower welding pieces (48A and 48B) welded to an outboard side of the inner panel and a channel section (48C) bulging away from the inner panel between the two welding pieces, and **in that** the horizontal section (40C) of the first reinforcing member (40), the horizontal piece (46D) of the second reinforcing member (46; 32) and the centroid G of the cross section of the third reinforcing member (48) substantially align one another as seen in the fore and aft direction of the vehicle body when the front door is closed.

2. The vehicle body side structure according to claim 1,
wherein the second reinforcing member comprises a hinge patch (46; 32) attached to a part of the front pillar that supports an upper hinge (42) of the front door, for reinforcement.

3. The vehicle body side structure according to claim 1 or 2,
wherein the second reinforcing member includes a bulkhead piece (46D, 46E; 38) that extends across the front pillar and is welded to opposing inner walls (10A, 10B) of the front pillar (10).

4. The vehicle body side structure according to claim 1,
wherein the first reinforcing member (40) is provided with the hat shaped cross section as seen in the fore and direction that includes a pair of welding flanges (40A, 40B) welded to an inner side of an outer member (22A) of the upper member and the substantially horizontal section (40C).

5. The vehicle body side structure according to claim 4,
wherein one of the welding flanges (40B) of the first reinforcing member (40) is welded to a vertical wall of an outer member (22A) of the upper member, and the other welding flange (40A) of the first reinforcing member is welded to a part (22C) of the outer member of the upper member at an angle to the vertical wall thereof.

6. The vehicle body side structure according to any one of the preceding claims,
wherein the third reinforcing member (48) comprises a door beam member (48) extending substantially over an entire fore and aft extent of the front door.

7. The vehicle body side structure according to claim 2
wherein the hinge patch (32) includes a vertically extending central part (32A), a front flange bent (32D) laterally from the central part, a rear flange (32E) laterally bent from the central part, and the front and rear flanges of the hinge patch are welded to front and rear inner walls (11 B, 11 C) of the front pillar.

8. The vehicle body side structure according to claim 3 and 7,
wherein the bulkhead piece (38) of the hinge patch extends from at least one of upper and lower edge of the central part (32A), and is provided with an upwardly bent front flange (38B) and an upwardly bent rear flange (38A), the front and rear flanges of the bulkhead piece being welded to front and rear inner walls of the front pillar.

9. The vehicle body side structure according to claim 7 or 8,
wherein the central part (32A) of the hinge patch is formed with a bulge having a top surface (32B) abutting and welded to a front pillar inner panel (10A) of the front pillar, and a fastener (36) for securing the upper door hinge to the front pillar is passed through the bulge of the hinge patch.

10. The vehicle body side structure according to claim 1, further comprising
a center pillar (14) extending vertically behind the front pillar so as to define the door opening for the front door (20) jointly with the front pillar; and
a center pillar bulkhead member (47) extending between front and rear walls (19B, 19C) of the center pillar at a position overlapping at least partly with the third reinforcing member (48) as seen in the fore and aft direction.

11. The vehicle body side structure according to claim 10,
wherein the third reinforcing member comprises a door beam member (48) including an upper edge at least partly defining a lower edge of a window opening of the front door, and a rear end of the door beam member is provided with a local extension (48D, 48E) that is positioned to oppose a part of the center pillar adjacent to the center pillar bulkhead member when the front door is closed.

12. The vehicle body side structure according to claim 10 or 11,
wherein the center pillar (14) comprises a center pillar outer panel (15), a center pillar inner panel (17) configured to form a closed cross section with the center pillar inner panel, and a center pillar stiffener (19) interposed between the center pillar inner panel and center pillar outer panel, and the center pillar bulkhead member (48) is attached to the center pillar stiffener.

13. The vehicle body side structure according to any one of claims 10 to 12,
wherein the center pillar bulkhead member includes a horizontal center plate (47A), a front flange (47B) bent upward from the center plate, a rear flange (47C) bent upward from the center plate and a side flange (47D) bent upward from the center plate which are welded to front wall (19B), rear wall (19C) and side wall (19D) of the center pillar stiffener, respectively.

14. The vehicle body side structure according to claim 13,
wherein the side flange (47D) of the center pillar bulkhead member is formed with an opening (47G), and the center pillar stiffener and center pillar inner panel are formed with mutually aligning holes that also align with the opening of the side flange.

## Patentansprüche

1. Fahrzeugkarosserieseitenstruktur, umfassend:
eine Frontsäule (10), die einen geschlossenen Querschnitt hat und ein vertikales unteres Teil enthält;
ein oberes Element (22), das sich von einem Mittelteil der Frontsäule in vorwärtiger Richtung des Fahrzeugkörpers nach vorne erstreckt und
auch einen geschlossenen Querschnitt hat;
eine vordere Tür (20), die an die Frontsäule angelenkt ist, zum selektiven Schließen einer hinter der Frontsäule definierten Öffnung;
ein erstes Verstärkungselement (40), das an einer Innenseite des oberen Elements angebracht ist und sich in Vorne-und-Hinten-Richtung des Fahrzeugkörpers erstreckt;
ein zweites Verstärkungselement (46; 32), das an einer Innenseite der Frontsäule angebracht ist; und
ein drittes Verstärkungselement (48), das an einem Innenblech (20B) der vorderen Tür angebracht ist und sich in der Vorne-und-Hinten-Richtung der vorderen Tür erstreckt,
**dadurch gekennzeichnet, dass** das erste Verstärkungselement mit einem hutförmigen Querschnitt einschließlich eines im Wesentlichen horizontalen Abschnitts (40C) versehen ist, dass das zweite Verstärkungselement ein horizontales Stück (46D) enthält, dass das dritte Verstärkungselement obere und untere Schweißstücke (48A und
48B), die an eine Außenseite des Innenblechs geschweißt sind, sowie einen Kanalabschnitt (48C), der von dem Innenblech weg zwischen die zwei Schweißstücke gewölbt ist, enthält, und dass der horizontale Abschnitt (40C) des ersten Verstärkungselements (40), das horizontale Stück (46D) des zweiten Verstärkungselements (46; 32) und der Schwerpunkt G des Querschnitts des dritten Verstärkungselements (48), bei Betrachtung in der Vorne-und-Hinten-Richtung des Fahrzeugkörpers, im Wesentlichen miteinander fluchten,
wenn die vordere Tür geschlossen ist.

2. Die Fahrzeugkarosserieseitenstruktur nach Anspruch 1, worin das zweite Verstärkungselement zur Verstärkung eine Scharnierauflage (46; 32) aufweist, die an einem Teil der Frontsäule angebracht ist, welches das obere Scharnier (42) der vorderen Tür trägt.

3. Die Fahrzeugkarosserieseitenstruktur nach Anspruch 1 oder 2, worin das zweite Verstärkungselement ein Trennwandstück (46D; 46E; 38) enthält, das sich quer zur Frontsäule erstreckt und an entgegengesetzte Innenwände (10A, 10B) der Frontsäule (10) geschweißt ist.

4. Die Fahrzeugkarosserieseitenstruktur nach Anspruch 1, worin das erste Verstärkungselement (40), bei Betrachtung in der Vorne-und-Hinten-Richtung, mit dem hutförmigen Querschnitt versehen ist, der ein Paar von Schweißflanschen (40A, 40B), die an eine Innenseite eines äußeren Elements (22A) des oberen Elements geschweißt sind, und den im Wesentlichen horizontalen Abschnitt (40C) enthält.

5. Die Fahrzeugkarosserieseitenstruktur nach Anspruch 4,
worin einer der Schweißflansche (40B) des ersten Verstärkungselements (40) an eine vertikale Wand eines äußeren Elements (22A) des oberen Elements geschweißt ist, und der andere Schweißflansch (40A) des Verstärkungselements an ein Teil (22C) des äußeren Elements des oberen Elements mit einem Winkel zur vertikalen Wand davon geschweißt ist.

6. Die Fahrzeugkarosserieseitenstruktur nach einem der vorhergehenden Ansprüche,
worin das dritte Verstärkungselement (48) ein Türstrebenelement (48) aufweist, das sich im Wesentlichen über die gesamte Vorne-und-Hinten-Erstreckung der vorderen Tür erstreckt.

7. Die Fahrzeugkarosserieseitenstruktur nach Anspruch 2,
worin die Scharnierauflage (32) ein sich vertikal erstreckendes mittleres Teil (32A), einen vorderen Flansch (32D), der seitlich von dem mittleren Teil gebogen ist, einen hinteren Flansch (32E), der seitlich von dem mittleren Teil gebogen ist, enthält, und die vorderen und hinteren Flansche der Scharnierauflage an vordere und hintere Innenwände (11 B, 11 C) der Frontsäule geschweißt sind.

8. Die Fahrzeugkarosserieseitenstruktur nach Anspruch 3 und 7, worin das Trennwandstück (38) der Scharnierauflage sich von mindestens einem oberen und unteren Rand des mittleren Teils (32A) erstreckt und mit einem nach oben gebogenen vorderen Flansch (38B) und einem nach oben gebogenen hinteren Flansch (38A) versehen ist, wobei die vorderen und hinteren Flansche des Trennwandstücks an vordere und hintere Innenwände der Frontsäule geschweißt sind.

9. Die Fahrzeugkarosserieseitenstruktur nach Anspruch 7 oder 8, worin das mittlere Teil (32A) der Scharnierauflage mit einer Wölbung ausgebildet ist, die eine Oberseite (32B) aufweist, die sich an einem Frontsäuleninnenblech (10A) der Frontsäule abstützt und daran geschweißt ist, und ein Befestigungselement (36) zum Sichern des oberen Türscharniers an der Frontsäule durch die Wölbung der Scharnierauflage hindurchgeht.

10. Die Fahrzeugkarosserieseitenstruktur nach Anspruch 1,
ferner umfassend
eine Mittelsäule (14), die sich vertikal hinter der Frontsäule erstreckt, um gemeinsam mit der Frontsäule die Türöffnung für die vordere Tür (20) definieren; und
ein Mittelsäulentrennwandelement (47), das sich zwischen vorderen und hinteren Wänden (19B, 19C) der Mittelsäule an einer Position erstreckt, die, bei Betrachtung in der Vorne-und-Hinten-Richtung, zumindest teilweise mit dem dritten Verstärkungselement (48) überlappt.

11. Die Fahrzeugkarosserieseitenstruktur nach Anspruch 10,
worin das dritte Verstärkungselement ein Türstrebenelement (48) aufweist, das einen oberen Rand enthält, der zumindest teilweise einen unteren Rand einer Fensteröffnung der vorderen Tür definiert, und ein Hinterende des Türstrebenelements mit einer örtlichen Verlängerung (48D, 48E) versehen ist, die gegenüber einem Teil der Mittelsäule benachbart dem Mittelsäulentrennwandelement angeordnet ist, wenn die vordere Tür geschlossen ist.

12. Die Fahrzeugkarosserieseitenstruktur nach Anspruch 10 oder 11, worin die Mittelsäule (14) ein Mittelsäulenaußenblech (14), ein Mittelsäuleninnenblech (17), das zur Bildung eines geschlossenen Querschnitts mit dem Mittelsäuleninnenblech konfiguriert ist, sowie eine Mittelsäulenverstärkung (19), die zwischen dem Mittelsäuleninnenblech und dem Mittelsäulenaußenblech angeordnet ist, aufweist, und das Mittelsäulentrennwandelement (48) an der Mittelsäulenverstärkung angebracht ist.

13. Die Fahrzeugkarosserieseitenstruktur nach einem der Ansprüche 10 bis 12,
worin das Mittelsäulentrennwandelement eine horizontale mittlere Platte (47A), einen vorderen Flansch (47B), der von der mittleren Platte nach oben gebogen ist, einen hinteren Flansch (47C), der von der mittleren Platte nach oben gebogen ist, und einen Seitenflansch (47D), der von der mittleren Platte nach oben geboten ist, enthält, die jeweils an eine vordere Wand (19B), eine Rückwand (19C) und eine Seitenwand (19D) der Mittelsäulenverstärkung geschweißt sind.

14. Die Fahrzeugkarosserieseitenstruktur nach Anspruch 13, worin der Seitenflasch (47D) des Mittelsäulentrennwandelements mit einer Öffnung (47G) ausgebildet ist, und die Mittelsäulenverstärkung und das Mittelsäuleninnenblech mit zueinander ausgerichteten Löchern ausgebildet sind, die auch mit einer Öffnung des Seitenflansches ausgerichtet sind.

## Revendications

1. Structure latérale de corps de véhicule, comprenant un montant avant (10) ayant une section transversale fermée et comprenant une partie inférieure verticale ; un élément supérieur (22) s'étendant vers l'avant depuis une partie centrale du montant avant dans un sens avant du corps de véhicule et ayant aussi une section transversale fermée ; une porte avant (20) axée sur le montant avant pour fermer de façon sélective une ouverture définie derrière le montant avant ; un premier élément de renforcement (40) fixé à un côté interne de l'élément supérieur et s'étendant dans un sens longitudinal du corps de véhicule ; un deuxième élément de renforcement (46 ; 32) fixé à un côté interne du montant avant et un troisième élément de renforcement (48) fixé à un panneau interne (20B) de la porte avant et s'étendant dans le sens longitudinal de la porte avant, **caractérisée en ce que** le premier élément de renforcement est doté d'une section transversale à profil en chapeau comprenant une section sensiblement horizontale (40C) ; **en ce que** le deuxième élément de renforcement comprend une pièce horizontale (46D), **en ce que** le troisième élément de renforcement comprend des pièces de soudure supérieure et inférieure (48A et 48B) soudées à un côté extérieur du panneau interne et une section formant canal (48C) faisant saillie du panneau interne entre les deux pièces de soudure, et **en ce que** la section horizontale (40C) du premier élément de renforcement (40), la pièce horizontale (46D) du deuxième élément de renforcement (46 ; 32) et le centroïde G de la section transversale du troisième élément de renforcement (48) s'alignent sensiblement l'un par rapport à l'autre selon la vue dans le sens longitudinal du corps de véhicule lorsque la porte avant est fermée.

2. Structure latérale de corps de véhicule selon la revendication 1, dans laquelle le deuxième élément de renforcement comprend une pièce charnière (46 ; 32) fixée à une partie du montant avant qui soutient une charnière supérieure (42) de la porte avant, pour renforcement.

3. Structure latérale de corps de véhicule selon la revendication 1 ou 2, dans laquelle le deuxième élément de renforcement comprend une pièce formant cloison de séparation (46D, 46E ; 38) qui s'étend à travers le montant avant et est soudée à des parois internes opposées (10A, 10B) du montant avant (10).

4. Structure latérale de corps de véhicule selon la revendication 1, dans laquelle le premier élément de renforcement (40) est doté de la section transversale à profil en chapeau selon la vue dans le sens longitudinal qui comprend deux brides de soudure (40A, 40B) soudées à un côté interne d'un élément externe (22A) de l'élément supérieur et la section sensiblement horizontale (40C).

5. Structure latérale de corps de véhicule selon la revendication 4, dans laquelle l'une des brides de soudure (40B) du premier élément de renforcement (40) est soudée à une paroi verticale d'un élément externe (22A) de l'élément supérieur, et l'autre bride de soudure (40A) du premier élément de renforcement est soudée à une partie (22C) de l'élément externe de l'élément supérieur angulairement par rapport à la paroi verticale de celui-ci.

6. Structure latérale de corps de véhicule selon l'une quelconque des revendications précédentes, dans laquelle le troisième élément de renforcement (48) comprend un élément formant poutre de porte (48) s'étendant sensiblement sur une étendue longitudinale de la porte avant.

7. Structure latérale de corps de véhicule selon la revendication 2, dans laquelle la pièce charnière (32) comprend une partie centrale s'étendant verticalement (32A), une bride avant courbée (32D) latéralement depuis la partie centrale, une bride arrière (32E) courbée latéralement depuis la partie centrale, et les brides longitudinales de la pièce charnière sont soudées aux parois internes avant et arrière (11B, 11C) du montant avant.

8. Structure latérale de corps de véhicule selon la revendication 3 et 7, dans laquelle la pièce formant cloison de séparation (38) de la pièce charnière s'étend d'au moins une de la bordure supérieure et inférieure de la partie centrale (32A), et est dotée d'une bride avant courbée vers le haut (38B) et d'une bride arrière courbée vers le haut (38A), les brides avant et arrière de la pièce formant cloison de séparation étant soudées aux parois internes avant et arrière du montant avant.

9. Structure latérale de corps de véhicule selon la revendication 7 ou 8, dans laquelle la partie centrale (32A) de la pièce formant charnière est formée avec une saillie ayant une surface supérieure (32B) butant contre et soudée à un panneau interne avant (10A) du montant avant, et une attache (36) pour fixer la charnière supérieure de porte au montant avant est passée à travers la saillie de la pièce formant charnière.

10. Structure latérale de corps de véhicule selon la revendication 1, comprenant en outre un montant central (14) s'étendant verticalement derrière le montant avant de manière à définir l'ouverture de porte pour la porte avant (20) conjointement avec le montant avant ; et un élément formant cloison de séparation du montant central (47) s'étendant entre les parois avant et arrière (19B, 19C) du montant central à une position recouvrant au moins partiellement le troisième élément de renforcement (48) selon la vue dans le sens longitudinal.

11. Structure latérale de corps de véhicule selon la revendication 10, dans laquelle le troisième élément de renforcement comprend un élément formant renfort de porte (48) comprenant un bord supérieur définissant au moins partiellement un bord inférieur d'une ouverture de fenêtre de la porte avant, et une extrémité arrière de l'élément formant renfort de porte est dotée d'une extension locale (48D, 48E) qui est positionnée pour être opposée à une partie du montant central adjacent à l'élément formant cloison de séparation du montant central lorsque la porte avant est fermée.

12. Structure latérale de corps de véhicule selon la revendication 10 ou 11, dans laquelle le montant central (14) comprend un panneau externe du montant central (15), un panneau interne du montant central (17) configurés pour former une section transversale fermée avec le panneau interne du montant central, et un élément raidisseur du montant central (19) interposé entre le panneau interne du montant central et le panneau externe du montant central, et l'élément formant cloison de séparation du montant central (48) est fixé à l'élément raidisseur du montant central.

13. Structure latérale de corps de véhicule selon l'une quelconque des revendications 10 à 12, dans laquelle l'élément formant cloison de séparation du montant central comprend une plaque centrale horizontale (47A), une bride avant (47B) courbée vers le haut depuis la plaque centrale, une bride arrière (47C) courbée vers le haut depuis la plaque centrale et une bride latérale (47D) courbée vers le haut depuis la plaque centrale qui sont soudées à une paroi avant (19B), une paroi arrière (19C) et une paroi latérale (19D) de l'élément raidisseur du montant central, respectivement.

14. Structure latérale de corps de véhicule selon la revendication 13, dans laquelle la bride latérale (47D) de l'élément formant cloison de séparation du montant central est formée avec une ouverture (47G), et l'élément raidisseur du montant central et le panneau interne du montant central sont formés avec des trous s'alignant mutuellement qui s'alignent aussi avec l'ouverture de la bride latérale.
